# EUROPEAN PATENT SPECIFICATION

(11) **EP 4 156 333 B1**
(45) Date of publication and mention of the grant of the patent: **05.08.2026**
(21) Application number: 22816291.3
(22) Date of filing: 13.04.2022
(51) Int. Cl.: H01M 4/04, H01M 4/36, H01M 4/587, H01M 4/38, H01M 4/62, H01M 10/052, H01M 4/02, H01M 4/134, H01M 4/137, H01M 4/66

(54) **NEGATIVE ELECTRODE FOR LITHIUM SECONDARY BATTERY AND LITHIUM SECONDARY BATTERY COMPRISING SAME**
NEGATIVELEKTRODE FÜR LITHIUMSEKUNDÄRBATTERIE UND LITHIUMSEKUNDÄRBATTERIE DAMIT
ÉLECTRODE NÉGATIVE DE BATTERIE SECONDAIRE AU LITHIUM ET BATTERIE SECONDAIRE AU LITHIUM LA COMPRENANT

(30) Priority: 03.06.2021 KR 20210071885
(43) Date of publication of application: 29.03.2023
(73) Proprietor: LG Energy Solution, Ltd., Seoul 07335 (KR)
(72) Inventor: KIM, Yunjung, Daejeon 34122 (KR); KIM, Myeongseong, Daejeon 34122 (KR); KIM, Kihyun, Daejeon 34122 (KR)
(74) Representative: Goddar, Heinz J.
(86) International application number: PCT/KR2022/005344
(87) International publication number: WO 2022/255630

(56) References cited:
- EP-A1- 3 157 078
- EP-B1- 2 850 677
- CN-A- 110 190 243
- KR-A- 20150 143 372
- KR-A- 20150 143 372
- KR-A- 20160 052 351
- KR-A- 20180 048 309
- KR-A- 20190 045 522
- KR-B1- 101 920 714
- KR-B1- 101 920 714
- US-A1- 2017 033 406
- SUN SEHO ET AL: "Facile ex situ formation of a LiF-polymer composite layer as an artificial SEI layer on Li metal by simple roll-press processing for carbonate electro ... - Journal of Materials Chemistry A (RSC Publishing) DOI:10.1039/D0TA05372D", JOURNAL OF MATERIALS CHEMISTRY A, vol. 8, no. 33, 25 August 2020 (2020-08-25), GB, pages 17229 - 17237, XP093251568, ISSN: 2050-7488, DOI: 10.1039/D0TA05372D

## Description

### [Technical Field]

This application claims the benefit of priority based on Korean Patent Application No. 10-2021-0071885 filed on June 3, 2021.

The present invention relates to a negative electrode for a lithium secondary battery and a lithium secondary battery comprising the same, more particularly, to a negative electrode for a lithium secondary battery, which comprises lithium metal introduced into the outer surface and inside of a three-dimensional carbon structure coated with a fluorine-based polymer as further specified in the appended set of claims, and a lithium secondary battery comprising the same.

### [Background Art]

Recently, as the miniaturization and weight reduction of electronic products, electronic devices, communication devices and the like are rapidly progressing and the need for electric vehicles has been greatly increased in relation to environmental problems, there is a growing demand for performance improvements in secondary batteries used as energy sources for these products.

In particular, the lithium-sulfur (Li-S) battery is a secondary battery using a sulfur-based material having a sulfur-sulfur bond (S-S bond) as a positive electrode active material and using lithium metal as a negative electrode active material. There is an advantage that sulfur, which is the main material of the positive electrode active material, is very rich in resources, is not toxic, and has a low atomic weight. In addition, theoretical discharging capacity of the lithium-sulfur battery is 1675 mAh/g-sulfur, and its theoretical energy density is 2,600 Wh/kg. Since the theoretical energy density of the lithium-sulfur battery is much higher than the theoretical energy density of other battery systems currently under study (Ni-MH battery: 450Wh/kg, Li-FeS battery: 480Wh/kg, Li-MnO₂ battery: 1,000Wh/kg, Na-S battery: 800Wh/kg), the lithium-sulfur battery is the most promising battery among the batteries developed so far.

During the discharging reaction of the lithium-sulfur battery, an oxidation reaction of lithium occurs at the negative electrode and a reduction reaction of sulfur occurs at the positive electrode. Sulfur before discharging has an annular S₈ structure. During the reduction reaction (discharging), as the S-S bond is cut off, the oxidation number of S decreases, and during the oxidation reaction (charging), as the S-S bond is re-formed, electrical energy is stored and generated using an oxidation-reduction reaction in which the oxidation number of S increases. During this reaction, the sulfur is converted from the annular S₈ structure to the linear lithium polysulfide (Li₂Sₓ, x = 8, 6, 4, 2) by the reduction reaction and eventually, when the lithium polysulfide is completely reduced, lithium sulfide (Li₂S) is finally produced. By the process of reducing to each lithium polysulfide, the discharging behavior of the lithium-sulfur battery is characterized by showing the discharging voltage step by step unlike a lithium-ion battery.

However, when lithium metal is used as a negative electrode, non-uniformity in electron density may occur on the surface of lithium metal due to the high reactivity during operation of the battery. As a result, a branch-shaped lithium dendrite is generated on the surface of the electrode, and protrusions are formed or grown on the surface of the electrode, making the surface of the electrode very rough. This lithium dendrite causes deterioration of battery performance and, in severe cases, damage to the separator and short circuit of the battery. As a result, the temperature inside the battery rises, and thus there is a risk of explosion and fire of the battery and there is a problem that the lifetime of the battery is limited.

In order to solve these problems, studies have been conducted to introduce a polymer protective layer or inorganic solid protective layer into the lithium metal layer, to increase the concentration of the salt in the electrolyte solution, or to apply suitable additives.

KR 2019 0045522 A discloses a negative electrode for a lithium-sulfur battery with improved lifetime, a manufacturing method thereof, and a lithium-sulfur battery including the same. The negative electrode for a lithium-sulfur battery comprises a negative electrode current collector; a carbon nanofiber layer applied on the negative electrode current collector; and a lithium metal introduced into an outer surface and the inside of the carbon nanofiber layer.

KR 2015 0143372 A discloses a lithium electrode and a lithium secondary battery comprising the same. The lithium electrode comprises a porous carbon body and a lithium metal inserted into pores of the porous carbon body.

KR 101 920 714 B1 discloses an anode for a lithium battery, comprising a metal layer containing lithium and a carbon layer having a plate structure formed on a surface of the metal layer, a method for manufacturing the same, and a lithium battery comprising the anode.

KR 2017 0117649 A discloses a protective film for a lithium electrode, a lithium electrode including the protective film, and a lithium secondary battery, and more particularly, a protective film for protecting a lithium electrode, and a lithium secondary battery including the lithium electrode, which can improve the performance of the battery.

KR 2016 0052351 A discloses a lithium metal electrode having a stable protective layer, and a lithium secondary battery comprising the same. The lithium metal electrode having a stable protective layer is disclosed to prevent internal short-circuit of the battery by intercalating and absorbing free lithium-ion or lithium dendrites, wherein the free lithium-ion is generated by charge and discharge because a lithium dendrite absorbent material is contained in a polymer protective film, and improves charge-discharge cycle lifespan properties. In addition, the lithium dendrite absorbent material is disclosed to have improved battery stability due to relatively low reactivity.

However, the inhibitory effect on lithium dendrite in these studies is insufficient.

### [Disclosure]

### [Technical Problem]

The inventors of the present invention have conducted various studies to solve the above problems, and as a result, the inventors of the present invention have confirmed that when lithium metal constituting the negative electrode of the lithium secondary battery is applied on an outer surface and inside of the three-dimensional carbon structure coated with a fluorine-based polymer as further specified below, the fluorine-based polymer and the lithium metal react to form lithium fluoride at an interface between the three-dimensional carbon structure coated with the fluorine-based polymer and the lithium metal, the lithium fluoride may protect the lithium metal to suppress formation of lithium dendrite and improve lifetime of the lithium secondary battery, and thereby have completed the present invention.

Therefore, it is an object of the present invention to provide a negative electrode for a lithium secondary battery, which capable of suppressing the generation of lithium dendrite and improving the lifetime of the lithium secondary battery, and a lithium secondary battery comprising the same.

### [Technical Solution]

In order to achieve the above object, the present invention provides a negative electrode for a lithium secondary battery, the negative electrode comprising:
a three-dimensional carbon structure coated with a fluorine-based polymer; and lithium metal applied on an outer surface and inside of the three-dimensional carbon structure coated with the fluorine-based polymer;
wherein the three-dimensional carbon structure is a porous carbon structure comprising at least one selected from the group consisting of a carbon paper, a carbon felt, and a carbon mat; or the three-dimensional carbon structure means cylindrical carbon materials interconnected in three dimensions, wherein the cylindrical carbon material are at least one selected from the group consisting of carbon nanofibers, carbon nanotubes, graphite nanofibers, and activated carbon fibers;
the fluorine-based polymer comprises at least one selected from the group consisting of polytetrafluoroethylene, polyvinylidene fluoride, vinylidene fluoride-hexafluoropropylene copolymer, perfluoroalkoxy alkane, tetrafluoroethylene-perfluoroalkyl vinyl ether copolymer, tetrafluoroethylene-hexafluoropropylene copolymer, ethylene-tetrafluoroethylene copolymer, tetrafluoroethylene-chlorotrifluoroethylene copolymer and ethylene-chlorotrifluoroethylene copolymer;
the three-dimensional carbon structure coated with the fluorine-based polymer contains 5 to 30 parts by weight of fluorine relative to 100 parts by weight of carbon measured using SEM point EDS.

In addition, the present invention provides a lithium secondary battery comprising a positive electrode; a negative electrode; a separator interposed between the positive electrode and the negative electrode; and an electrolyte,
wherein the negative electrode is the negative electrode of the present invention.

### [Advantageous Effects]

In the negative electrode for the lithium secondary battery of the present invention, lithium fluoride having excellent ion conductivity can be formed at an interface between the three-dimensional carbon-based structure coated with the fluorine-based polymer and the lithium metal to protect the lithium metal, thereby inhibiting growth of lithium dendrite.

Accordingly, the lithium secondary battery including the negative electrode for the lithium secondary battery of the present invention may have improved lifetime characteristics.

### [Description of Drawings]

FIG. 1 is a schematic diagram showing a method of manufacturing the negative electrode for the lithium secondary battery of the present invention.
FIG. 2 is a schematic diagram of the negative electrode for the lithium secondary battery of Comparative Example 2.
FIG. 3 is a schematic diagram showing a method of manufacturing the negative electrode for the lithium secondary battery of Comparative Example 3.
FIG. 4 is a SEM photograph of the surface of the three-dimensional carbon structure coated with PTFE prepared in Example 1.

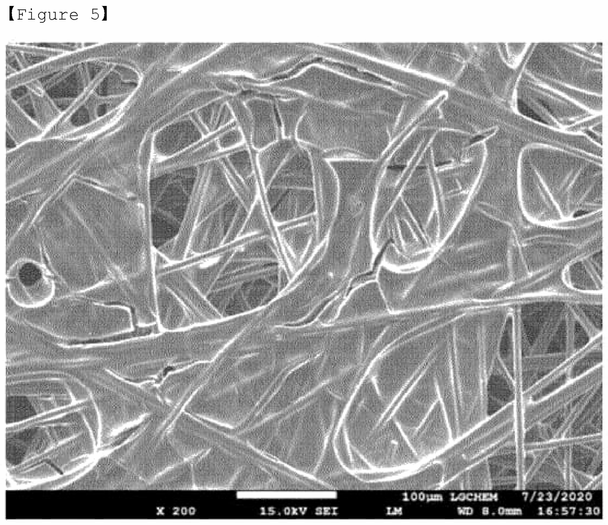

FIG. 5 is a SEM photograph of the surface of the three-dimensional carbon structure coated with PTFE prepared in Comparative Example 1.

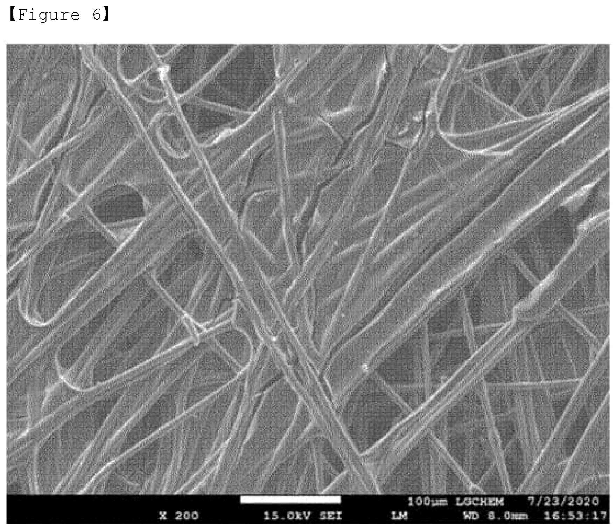

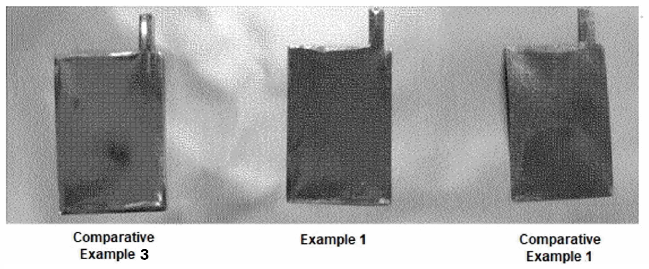

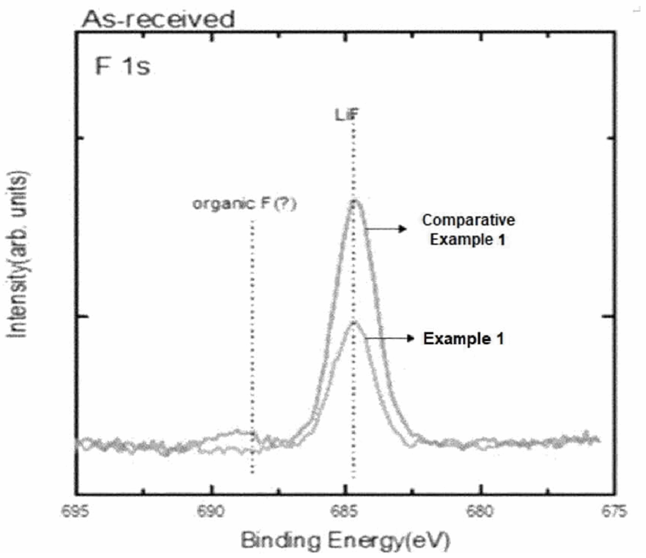

FIG. 6 is a SEM photograph of the surface of the three-dimensional carbon structure of Comparative Example 3.
FIG. 7 is a photograph of negative electrodes for the lithium secondary battery of Examples 1 and Comparative Examples 1 and 3.
FIG. 8 is an XPS graph of Experimental Example 3.

### [Best Mode]

Hereinafter, the present invention will be described in more detail.

In a lithium secondary battery, preferably a lithium-sulfur battery, using lithium metal as a negative electrode, lithium dendrite grows on the surface of the negative electrode due to the high reactivity of lithium during operation. As a result, there is a problem that the negative electrode becomes porous, and the lifetime characteristics of the lithium secondary battery including the same are deteriorated. In addition, the lithium negative electrode does not have a host material that can store lithium, unlike other negative electrode active materials such as graphite, and thus there is a problem that during the charging and discharging process of the lithium secondary battery, a large change in the volume of the negative electrode occurs, causing non-uniform use of lithium.

In order to solve the above problems, it was intended to improve the reversibility of lithium and the lifetime characteristics of the lithium secondary battery by introducing a three-dimensional carbon structure capable of supporting lithium metal to the lithium negative electrode. However, since carbon does not have excellent affinity with lithium, it is difficult to uniformly introduce lithium into the pores of the three-dimensional carbon structure, so that it is difficult to solve the above problems.

Therefore, in the present invention, an attempt was made to provide a negative electrode for a lithium secondary battery which is capable of inhibiting the growth of lithium dendrite and improving the lifetime characteristics of the lithium secondary battery, by using a three-dimensional carbon structure coated with a fluorine-based polymer to uniformly introduce lithium metal into the outer surface and inside of the three-dimensional carbon structure.

That is, the present invention relates to a negative electrode for a lithium secondary battery, the negative electrode comprising:
a three-dimensional carbon structure coated with a fluorine-based polymer; and lithium metal applied on an outer surface and inside of the three-dimensional carbon structure coated with the fluorine-based polymer;
wherein the three-dimensional carbon structure is a porous carbon structure comprising at least one selected from the group consisting of a carbon paper, a carbon felt, and a carbon mat; or the three-dimensional carbon structure means cylindrical carbon materials interconnected in three dimensions, wherein the cylindrical carbon material are at least one selected from the group consisting of carbon nanofibers, carbon nanotubes, graphite nanofibers, and activated carbon fibers;
the fluorine-based polymer comprises at least one selected from the group consisting of polytetrafluoroethylene, polyvinylidene fluoride, vinylidene fluoride-hexafluoropropylene copolymer, perfluoroalkoxy alkane, tetrafluoroethylene-perfluoroalkyl vinyl ether copolymer, tetrafluoroethylene-hexafluoropropylene copolymer, ethylene-tetrafluoroethylene copolymer, tetrafluoroethylene-chlorotrifluoroethylene copolymer and ethylene-chlorotrifluoroethylene copolymer;
the three-dimensional carbon structure coated with the fluorine-based polymer contains 5 to 30 parts by weight of fluorine relative to 100 parts by weight of carbon measured using SEM point EDS.

The three-dimensional carbon structure is a porous carbon structure, and specifically means that the cylindrical carbon materials are interconnected in three dimensions.

In this case, the three-dimensional structure may mean that the intersection points where two or more strands are crossed are distributed in three dimensions.

Also, the three-dimensional structure may mean that each basic unit entangled in two dimensions is again entangled in three dimensions to finally have a three-dimensional structure. The "entangled" may mean that two or more strands are crossed with each other through physical contact.

The cylindrical carbon material comprises at least one selected from the group consisting of carbon nanofibers, carbon nanotubes, graphite nanofibers, and activated carbon fibers.

In addition, the porous carbon structure comprises at least one selected from the group consisting of a carbon paper, a carbon felt, and a carbon mat. Even when lithium metal is applied on the outer surface and the inside of the porous carbon structure, the structure must be maintained, and thus the porous carbon structure may be preferably carbon paper.

Since the three-dimensional carbon structure is a state in which cylindrical carbon materials are entangled in three dimensions, empty spaces, i.e., pores, may occur in the carbon structure. Thus, lithium metal can be applied on the outer surface and the inside of the three-dimensional carbon structure.

In the present invention, the three-dimensional carbon structure may serve not only as a support for supporting lithium on the outer surface and inside, but also as a current collector.

In the three-dimensional carbon structure, carbon does not have a high affinity for lithium metal, so there is a problem that lithium cannot be electrochemically and uniformly plated on the surface of the three-dimensional carbon structure during operation of the lithium secondary battery. Therefore, in the present invention, in order to induce uniform plating of lithium inside the three-dimensional carbon structure, the surface of the three-dimensional carbon structure was coated with a fluorine-based polymer. When lithium metal is applied on the outer surface and the inside of the three-dimensional carbon structure coated with the fluorine-based polymer, the fluorine-based polymer and the lithium metal react to spontaneously form lithium fluoride (LiF). The lithium fluoride has excellent ion conductivity, and thus it is possible to inhibit the growth of lithium dendrite, thereby stabilizing lithium metal. Accordingly, it is possible to improve the lifetime characteristics of the lithium secondary battery comprising the negative electrode for the lithium secondary battery of the present invention.

The fluorine-based polymer comprises at least one selected from the group consisting of polytetrafluoroethylene, polyvinylidene fluoride, vinylidene fluoride-hexafluoropropylene copolymer, perfluoroalkoxy alkane, tetrafluoroethylene-perfluoroalkyl vinyl ether copolymer, tetrafluoroethylene-hexafluoropropylene copolymer, ethylene-tetrafluoroethylene copolymer, tetrafluoroethylene-chlorotrifluoroethylene copolymer and ethylene-chlorotrifluoroethylene copolymer, and may preferably comprise polytetrafluoroethylene.

The three-dimensional carbon structure coated with the fluorine-based polymer is not particularly limited in a coating method, but it can be prepared by melting and coating a fluorine-based polymer or coating an aqueous solution containing a fluorine-based polymer. In the present invention, the three-dimensional carbon structure coated with the fluorine-based polymer may be preferably prepared by coating the three-dimensional carbon structure with an aqueous solution containing a fluorine-based polymer.

Based on the total weight of the aqueous solution containing the fluorine-based polymer, the fluorine-based polymer may be contained in an amount of 2 % by weight or more and less than 20 % by weight, preferably 5 to 15 % by weight.

If the fluorine-based polymer is contained in an amount of less than 2 % by weight, the coating on the surface of the three-dimensional carbon structure is not sufficient, and thus there may be a problem in that non-uniform lithium fluoride is formed at the interface between the lithium metal and the three-dimensional carbon structure. If the fluorine-based polymer is contained in an amount of 20% by weight or more, there may be a problem that lithium metal and the fluorine-based polymer are overreacted, resulting in a large loss of lithium metal, and thus the lifetime characteristics of the lithium secondary battery is not improved.

The three-dimensional carbon structure coated with the fluorine-based polymer contains 5 to 30 parts by weight, preferably 10 to 25 parts by weight, more preferably 15 to 20 parts by weight of fluorine, based on 100 parts by weight of carbon.

If the fluorine is contained in an amount of less than 5 parts by weight, the coating of the fluorine-based polymer on the surface of the three-dimensional carbon structure is not sufficiently made, and accordingly, there may be a problem that a sufficient amount of lithium fluoride is not formed on the outer surface and inside of the three-dimensional carbon structure. In addition, if fluorine is contained in an amount exceeding 30 parts by weight, an overreaction between lithium metal and fluorine-based polymer may occur when lithium metal is introduced, resulting in a large loss of lithium metal, and thus the lifetime characteristics of the lithium secondary battery may not be improved. In addition, as lithium fluoride is excessively generated, the negative electrode may be easily brittle, which may negatively affect the manufacturing process.

The coating may be coated by a conventional method known in the art. The coating may be performed by, for example, a doctor blade coating method, a dip coating method, a gravure coating method, a slit die coating method, a spin coating method, a comma coating method, a bar coating method, a reverse roll coating method, a screen coating method, a cap coating method, or the like, and in the present invention, the coating is preferably performed by a dip coating method.

In the negative electrode for the lithium secondary battery, the lithium metal can be applied on the outer surface and the inside of the three-dimensional carbon structure coated with the fluorine-based polymer by laminating a lithium foil on the three-dimensional carbon structure coated with the fluorine-based polymer.

The lamination method is not particularly limited as long as it is widely used in the art, but in the present invention, a lithium foil may be laminated by a roll press method preferably.

More specifically, the lithium metal can be applied on the outer surface and the inside of the three-dimensional carbon structure coated with the fluorine-based polymer, by laminating a lithium foil on both surfaces of the three-dimensional carbon structure coated with the fluorine-based polymer and then rolling them with a roll press.

When the lithium metal is applied on the outer surface and the inside of the three-dimensional carbon structure coated with the fluorine-based polymer, the lithium metal and the fluorine-based polymer may spontaneously react to form lithium fluoride. That is, the negative electrode for the lithium secondary battery of the present invention contains lithium fluoride formed by reaction of the fluorine-based polymer and the lithium metal, wherein the lithium fluoride may be formed at the interface between the three-dimensional carbon structure coated with the fluorine-based polymer and the lithium metal.

The lithium fluoride has excellent ion conductivity, thereby inhibiting the growth of lithium dendrite, and may serve as a protective layer to protect the surface of the lithium metal, thereby contributing to the stabilization of the lithium metal. Accordingly, the lithium secondary battery, preferably the lithium-sulfur battery, comprising the negative electrode for the lithium secondary battery of the present invention may have improved lifetime characteristics.

The negative electrode for the lithium secondary battery of the present invention may be a negative electrode for a lithium-sulfur battery.

In addition, the present invention relates to a lithium secondary battery comprising a positive electrode; a negative electrode; a separator interposed between the positive electrode and the negative electrode; and an electrolyte, wherein the negative electrode is the negative electrode for the lithium secondary battery of the present invention described above.

The lithium secondary battery according to the present invention may preferably be a lithium-sulfur battery.

Since the lithium-sulfur battery uses the above-described negative electrode of the present invention as a negative electrode, formation of lithium dendrite is suppressed, and thus a lithium-sulfur battery having excellent lifetime characteristics can be provided.

The positive electrode, separator, and electrolyte of the lithium secondary battery are not particularly limited in the present invention, and are as known in this field.

The positive electrode according to the present invention comprises a positive electrode active material formed on the positive electrode current collector.

The positive electrode current collector supports the positive electrode active material and is not particularly limited as long as it has high electrical conductivity without causing chemical change in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material may comprise at least one selected from the group consisting of elemental sulfur (S₈) and a sulfur compound. Preferably, the positive electrode active material may comprise at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2). Most preferably, the positive electrode active material may comprise inorganic sulfur.

Accordingly, the lithium secondary battery of the present invention may be a lithium-sulfur battery.

Sulfur contained in the positive electrode active material is used in combination with an electrically conductive material such as a carbon material because it does not have electrical conductivity alone. Accordingly, sulfur is comprised in the form of a sulfur-carbon composite, and preferably, the positive electrode active material may be a sulfur-carbon composite.

The sulfur-carbon composite comprises a porous carbon material which not only provides a framework capable of uniformly and stably immobilizing sulfur but also compensates for the low electrical conductivity of sulfur so that the electrochemical reaction can proceed smoothly.

The porous carbon material can generally be prepared by carbonizing various carbonaceous precursors. The porous carbon material may comprise uneven pores therein, the average diameter of the pores is in the range of 1 to 200 nm, and the porosity may range from 10 to 90% of the total volume of the porous carbon material. If the average diameter of the pores is less than the above range, the pore size is only at the molecular level, and thus impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and graphite such as natural graphite, artificial graphite and expanded graphite, and activated carbon. Preferably, the porous carbon material may be carbon nanotubes.

The sulfur in the sulfur-carbon composite is located on at least one of the inner and outer surfaces of the aforementioned porous carbon material, and as an example, may exist in an area of less than 100%, preferably 1 to 95%, more preferably 40 to 96% of the entire inner and outer surface of the porous carbon material. When sulfur as described above is present on the inner and outer surfaces of the porous carbon material within the above range, the maximum effect may be exhibited in terms of an electron transfer area and wettability with an electrolyte. Specifically, since sulfur is thinly and evenly impregnated on the inner and outer surfaces of the porous carbon material in the above range, the electron transfer contact area can be increased during the charging/discharging process. If sulfur is located in an area of 100% of the entire inner and outer surface of the porous carbon material, the carbon material is completely covered with sulfur, so that it has poor wettability to the electrolyte and poor contact, so that it cannot receive electrons and thus cannot participate in the electrochemical reaction.

The sulfur-carbon composite may contain the sulfur in an amount of 65 to 90% by weight, preferably 70 to 85 % by weight, more preferably, 72 to 80 % by weight, based on 100% by weight of sulfur-carbon composite. If the content of sulfur is less than the above-described range, as the content of the porous carbon material in the sulfur-carbon composite is relatively increased, the specific surface area is increased and thus when manufacturing the positive electrode, the content of the binder is increased. This increase in the amount of use of the binder eventually increases the sheet resistance of the positive electrode and acts as an insulator to prevent electron pass, thereby deteriorating the performance of the battery. On the contrary, if the content of sulfur exceeds the above-described range, sulfur, which cannot be combined with the porous carbon material, aggregates with each other, or is re-leached to the surface of the porous carbon material, and thus is difficult to receive electrons, and cannot participate in electrochemical reactions, thereby resulting in loss of the capacity of the battery.

The method for preparing the sulfur-carbon composite is not particularly limited in the present invention, and a method commonly used in the art may be used. As an example, a method of simply mixing sulfur and the porous carbon material and then heat-treating them to form a composite may be used.

The positive electrode active material may further comprise at least one selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, Tl and the like, and the group IVA element may comprise Ge, Sn, Pb, and the like.

In the positive electrode of the lithium secondary battery of the present invention, the positive electrode active material may be contained in an amount of 50 to 95% by weight, based on 100% by weight of the total weight of the positive electrode active material layer constituting the positive electrode of the lithium secondary battery. In the content of the positive electrode active material, based on 100% by weight of the total weight of the positive electrode active material layer, the lower limit may be 70% by weight or more or 85% by weight or more and the upper limit may be 99% by weight or less or 90% by weight or less. The content of the positive electrode active material may be set by a combination of the lower limit and the upper limit. If the content of the positive electrode active material is less than the above range, it is difficult for the electrode to sufficiently exhibit an electrochemical reaction. On the contrary, if the content of the positive electrode active material exceeds the above range, there is a problem that the content of the binder is relatively insufficient, so that the physical properties of the electrode are deteriorated.

In addition, the positive electrode active material layer may further comprise a binder and an electrically conductive material in addition to the positive electrode active material.

The binder may be additionally used to adhere the positive electrode active material well to the positive electrode current collector.

The binder maintains the positive electrode active material in the positive electrode current collector, and organically connects the positive electrode active materials to increase the bonding force between them, and any binder known in the art may be used.

For example, the binder may be, but is not limited to, polyvinylidene fluoride (PVDF), polyvinyl alcohol (PVA), polyacrylic acid (PAA), metal salts of polyacrylic acid (Metal-PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, polyvinylpyrrolidone, polytetrafluoroethylene, polyethylene, polypropylene, ethylene-propylene-diene polymer (EPDM), sulfonated-EPDM, styrene-butadiene rubber (SBR), fluorine rubber, hydroxypropyl cellulose, regenerated cellulose and various copolymers thereof.

The content of the binder may be 1 to 10% by weight based on 100% by weight of the total weight of the positive electrode active material layer constituting the positive electrode for the lithium secondary battery. If the content of the binder resin is less than the above range, the physical properties of the positive electrode may be deteriorated and thus the positive electrode active material can be detached. If the content of the binder exceeds the above range, the ratio of the positive electrode active material in the positive electrode is relatively reduced, so that the capacity of the battery may be reduced. Therefore, it is preferable that the content of the binder is determined to be appropriate within the above-mentioned range.

In addition, the electrically conductive material may be additionally used to further improve the electrical conductivity of the positive electrode active material.

The electrically conductive material electrically connects the electrolyte and the positive electrode active material to serve as a path for electrons to move from the current collector to the positive electrode active material, and the electrically conductive material may be used without limitation as long as it has electrical conductivity.

For example, as the electrically conductive material, graphite such as natural graphite and artificial graphite; carbon black such as Super-P, Denka black, acetylene black, Ketjen black, channel black, furnace black, lamp black, and thermal black; carbon derivatives such as carbon nanotubes and fullerene; electrically conductive fibers such as carbon fiber and metal fiber; carbon fluoride; metal powders such as aluminum and nickel powder or electrically conductive polymers such as polyaniline, polythiophene, polyacetylene, and polypyrrole may be used alone or in combination.

The electrically conductive material may be contained in an amount of 1 to 10% by weight, preferably 4 to 7% by weight, based on 100% by weight of the total weight of the positive electrode active material layer constituting the positive electrode. If the content of the electrically conductive material is less than the above range, it is difficult to transfer electrons between the positive electrode active material and the current collector, thereby reducing voltage and capacity. On the contrary, if the content of the electrically conductive material exceeds the above range, the proportion of the positive electrode active material may be reduced, so that the total energy (charge amount) of the battery may be reduced. Therefore, it is preferable that the content of the electrically conductive material is determined to be an appropriate content within the above-described range.

In the present invention, the method for manufacturing the positive electrode is not particularly limited, and various methods known by those skilled in the art or various methods modified therefor can be used.

As an example, the positive electrode may be manufactured by preparing a slurry composition for the positive electrode comprising the above-described components, and then applying it to at least one surface of the positive electrode current collector.

The slurry composition for the positive electrode comprises the positive electrode active material as described above, and may further comprise a binder, an electrically conductive material, and a solvent.

As the solvent, a solvent capable of uniformly dispersing the positive electrode active material, the electrically conductive material, and the binder is used. As such a solvent, water is most preferred as an aqueous solvent. At this time, water may be a distilled water or a distilled water, but is not necessarily limited thereto, and if necessary, a lower alcohol which can be easily mixed with water may be used. Examples of the lower alcohol comprise methanol, ethanol, propanol, isopropanol, and butanol, and they may be preferably used in mixture with water.

The content of the solvent may be contained at a level of having such a concentration as to facilitate the coating, and the specific content varies depending on the coating method and apparatus.

The slurry composition for the positive electrode may additionally comprise, if necessary, a material commonly used for the purpose of improving its function in the relevant technical field. For example, a viscosity adjusting agent, a fluidizing agent, a filler, etc. may be mentioned.

The method of applying the slurry composition for the positive electrode is not particularly limited in the present invention, and for example, methods such as doctor blade, die casting, comma coating, and screen printing may be mentioned. In addition, after molding on a separate substrate, the slurry composition for the positive electrode may be applied on the positive electrode current collector by pressing or lamination.

After the application, a drying process for removing the solvent may be performed. The drying process is carried out at a temperature and time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation or electron beam may be mentioned. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

Additionally, after the drying, the density of the positive electrode active material in the positive electrode may be increased by pressing the current collector. Methods, such as a mold press and a roll press, are mentioned as a press method.

The separator may be positioned between the positive electrode and the negative electrode.

The separator separates or insulates the positive electrode and the negative electrode from each other and enables lithium ions to be transported between the positive electrode and the negative electrode, and may be made of a porous non-conductive or insulating material. The separator may be used without particular limitation as long as it is used as a separator in a typical lithium secondary battery. The separator may be an independent member such as a film or may be a coating layer added to the positive electrode and/or the negative electrode.

As the separator, a separator with excellent impregnating ability for the electrolyte along with low resistance to ion migration in the electrolyte solution is preferable.

The separator may be made of a porous substrate. As the porous substrate, any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenylene oxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, and may be 0.001 *µ*m to 50 *µ*m and 10 to 95%, respectively.

The electrolyte is a non-aqueous electrolyte containing a lithium salt, and is composed of a lithium salt and an electrolyte solution. As the electrolyte solution, a non-aqueous organic solvent, an organic solid electrolyte, and an inorganic solid electrolyte are used.

The lithium salt of the present invention is a material that can be easily dissolved in a non-aqueous organic solvent, and may be, for example, at least one selected from the group consisting of LiCl, LiBr, LiI, LiClO₄, LiBF₄, LiB₁₀Cl₁₀, LiB(Ph)₄, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, lithium chloroborane, lithium lower aliphatic carboxylate, and lithium tetraphenyl borate.

The concentration of the lithium salt may be 0.2 to 2 M, preferably 0.6 to 2 M, more preferably, 0.7 to 1.7 M, depending on various factors such as the exact composition of the electrolyte mixture, the solubility of the salt, the conductivity of the dissolved salt, the charging and discharging conditions of the battery, the operating temperature and other factors known in the lithium battery field. If the concentration of the lithium salt is less than 0.2 M, the conductivity of the electrolyte may be lowered and thus the performance of the electrolyte may be deteriorated. If the concentration of the lithium salt exceeds 2 M, the viscosity of the electrolyte may increase and thus the mobility of the lithium ion (Li⁺) may be reduced.

The non-aqueous organic solvent should dissolve the lithium salt well, and the non-aqueous organic solvent of the present invention may comprise, for example, aprotic organic solvents such as N-methyl-2-pyrrolidinone, propylene carbonate, ethylene carbonate, butylene carbonate, dimethyl carbonate, diethyl carbonate, ethyl methyl carbonate, gamma-butyrolactone, 1,2-dimethoxyethane, 1,2-diethoxyethane, 2-methyl tetrahydrofuran, dimethylsulfoxide, 1,3-dioxolane, 4-methyl-1,3-dioxolane, diethylether, formamide, dimethylformamide, dioxolane, acetonitrile, nitromethane, methyl formate, methyl acetate, phosphate triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate, and these organic solvents can be used alone or in a mixed solvent form of two or more solvents thereof.

As the organic solid electrolyte, for example, polyethylene derivatives, polyethylene oxide derivatives, polypropylene oxide derivatives, phosphate ester polymers, agitation lysine, polyester sulfide, polyvinyl alcohol, polyvinylidene fluoride, and polymers comprising ionic dissociation groups and the like can be used.

As the inorganic solid electrolyte of the present invention, for example, nitrides, halides, sulfates and the like of Li such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂ may be used.

The positive electrode, separator, and electrolyte included in the lithium secondary battery can be prepared according to conventional components and manufacturing methods, respectively, and there is no particular limitation on the external shape of the lithium secondary battery, but may be cylindrical using a can, rectangular, pouch type or coin type.

Hereinafter, preferred examples are provided to help understanding of the present invention, but the following examples are only for exemplifying the present invention, and it is apparent to those skilled in the art that various changes and modifications can be made and such changes and modifications are within the scope of the appended claims.

### <Manufacture of negative electrode for lithium-sulfur battery>

### Example 1

Polytetrafluoroethylene (PTFE, Product name: Teflon^{™} PTFE DISP 30) was added to distilled water to prepare an aqueous solution of the fluorine-based polymer containing 10% by weight of PTFE based on the total weight of the aqueous solution of the fluorine-based polymer.

A carbon paper was coated with the aqueous solution of the fluorine-based polymer and dried to prepare a three-dimensional carbon structure coated with PTFE.

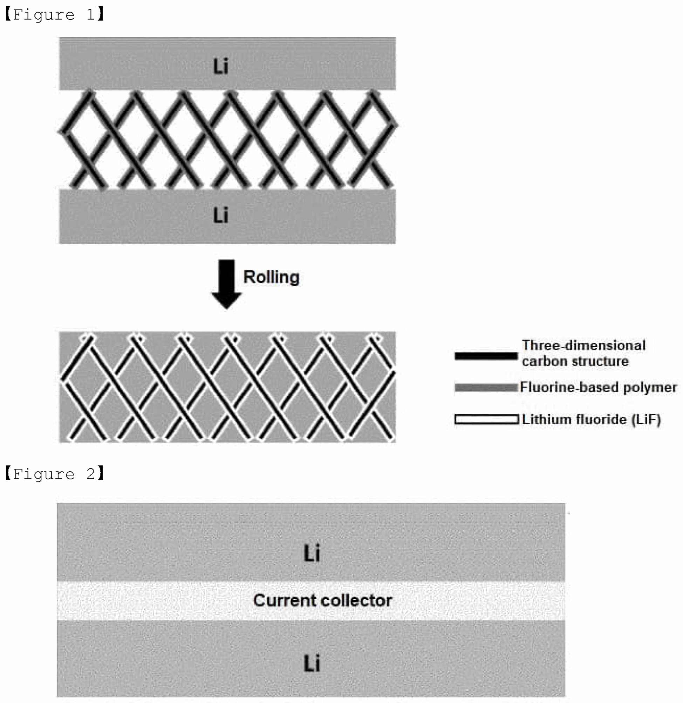

By laminating a lithium foil with a thickness of 60 µm on both surfaces of the three-dimensional carbon structure coated with PTFE and rolling them with a roll press, lithium was applied on the outer surface and the inside of the three-dimensional carbon structure coated with PTFE to manufacture a negative electrode (FIG. 1). At this time, a film having no adhesion property with lithium was used for the purpose of releasing the lithium foil on the surface in contact with the rolling roll.

During the rolling process, heat was generated, which is believed to be because an exothermic reaction occurs when lithium fluoride is generated due to a spontaneous reaction between PTFE and lithium.

### Comparative Example 1

A negative electrode was manufactured in the same manner as in Example 1, except that an aqueous solution of the fluorine-based polymer containing PTFE in an amount of 20 % by weight relative to the total weight of the aqueous solution of the fluorine-based polymer is used (FIG. 1).

During the rolling process, heat was generated, which is believed to be because an exothermic reaction occurs when lithium fluoride is generated due to a spontaneous reaction between PTFE and lithium. In addition, in the negative electrode for the lithium secondary battery of Comparative Example 1, brown color was generated on the surface, uneven marks were formed, and the surface began to change rough, within 1 to 2 hours after manufacture. This appears to be due to an overreaction between lithium metal and PTFE, and it was confirmed that the electrode was more easily broken (brittle).

### Comparative Example 2

A negative electrode was manufactured by laminating 60 µm thick lithium foil on both surfaces of a 10 µm thick copper current collector (FIG. 2).

### Comparative Example 3

A carbon paper was used as a three-dimensional carbon structure.

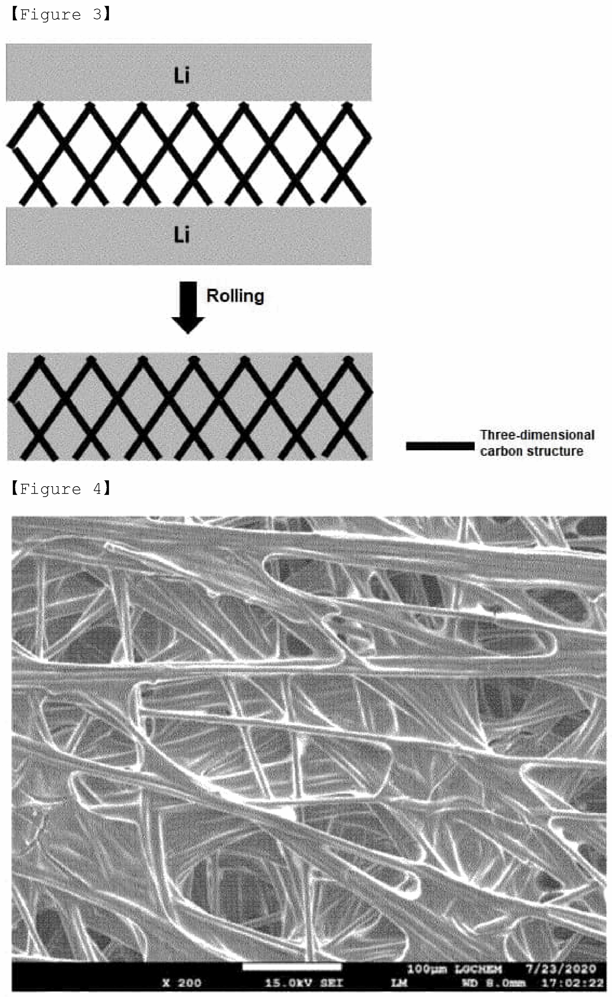

A negative electrode was prepared by laminating 60 µm thick lithium foils on both surfaces of the carbon paper, respectively, and rolling them with a roll press to introduce lithium into the outer surface and the inside of the three-dimensional carbon structure (FIG. 3). At this time, a film having no adhesion property with lithium was used for the purpose of releasing the lithium foil on the surface in contact with the rolling roll.

### Experimental Example 1. Measurement of content ratio of fluorine and carbon in three-dimensional carbon support coated with fluorine-based polymer

The content of fluorine coated on the three-dimensional carbon structure in the negative electrodes for the lithium-sulfur battery of Example 1 and Comparative Example 1 was measured.

The content of fluorine was measured using SEM point EDS.

In the three-dimensional carbon structure coated with PTFE of Example 1, it was confirmed that fluorine (F) was contained in an amount of 19 parts by weight (F/C ratio = 0.19) relative to 100 parts by weight of carbon (C).

In addition, in the three-dimensional carbon structure coated with PTFE of Comparative Example 1, it was confirmed that fluorine (F) was contained in an amount of 33 parts by weight (F/C ratio = 0.33) relative to 100 parts by weight of carbon (C).

### Experimental Example 2. Measurement of weight per unit area of three-dimensional carbon structure coated with PTFE and copper current collector

The weight per unit area of the PTFE-coated three-dimensional carbon structure prepared in Example 1 and the copper current collector of Comparative Example 2 were measured.

The weight per unit area of the PTFE-coated three-dimensional carbon structure prepared in Example 1 was 3.3 mg/cm², and the weight per unit area of the copper current collector of Comparative Example 2 was 9 mg/cm².

The negative electrode for the lithium-sulfur battery in Example 1 is a negative electrode in which lithium metal is applied on the outer surface and the inside of the three-dimensional carbon structure coated with PTFE which is a fluorine-based polymer, and the negative electrode for the lithium-sulfur battery in Comparative Example 2 is a negative electrode in which lithium foils are laminated on both surfaces of a copper current collector.

It was confirmed that the three-dimensional carbon structure coated with PTFE of Example 1 had a lower weight per unit area compared to the copper current collector of Comparative Example 2.

From this, it can be seen that the negative electrode of the present invention has a small loss of energy density per weight, thereby reducing the decrease in energy density.

### Experimental Example 3. Surface analysis of negative electrode for lithium-sulfur battery

The surface of the negative electrodes for the lithium-sulfur battery prepared in Example 1 and Comparative Example 1 was analyzed by XPS to determine whether lithium fluoride was generated.

As a result, it was confirmed that Example 1 contained fluorine (F) in an amount of 1.5% (atomic percent), and Comparative Example 1 contained it in an amount of 2.4% (atomic percent) (FIG. 8).

From this, it can be seen that in the case of the negative electrode of the present invention, a fluorine-based polymer and lithium react to form lithium fluoride (LiF) and that the larger the amount of coated fluorine-based polymer, the greater the amount of lithium fluoride formed.

### Experimental Example 4. Measurement of lifetime characteristics of lithium-sulfur battery

A sulfur-carbon (CNT) composite (S:C=75:25 (weight ratio)) as a positive electrode active material, an electrically conductive material (VGCF), and a binder (Li-PAA) were mixed in a weight ratio of 87.5:5:7.5, and this was added to distilled water to prepare a slurry for a positive electrode.

The slurry for the positive electrode was applied to both surfaces of an aluminum current collector, dried at a temperature of 80 °C, and rolled by a roll press to prepare a positive electrode. At this time, the loading amount was 3.5 mAh/cm².

1M LiTFSI and 1 % by weight of LiNO₃ were dissolved in an organic solvent obtained by mixing 1,3-dioxolane (DOL) and dimethyl ether (DME) in a volume of 1:1 to prepare an electrolyte.

A polyethylene porous film having a thickness of 16 *µ*m and a porosity of 68% was used as a separator.

As negative electrodes, the negative electrodes manufactured in Examples 1 and Comparative Example 1, and Comparative Examples 2 and 3 were used, respectively.

The separator was inserted between the positive electrode and the negative electrode and stacked to assemble a pouch cell, and then the electrolyte was injected and sealed to prepare each lithium-sulfur battery.

Each of the lithium-sulfur batteries was operated in CC mode of 0.2C charging and 0.3C discharging cycles (2.5/1.8 upper/lower limits, respectively) at a temperature of 25 °C to measure the cycle lifetime maintaining 80% of the initial capacity, and the results are shown in Table 1 below.

**Table 1:**

| | Number of Cycles (based on the capacity maintenance rate of 80%) |
|---|---|
| Example 1 | 218 |
| Comparative Example 1 | 139 |
| Comparative Example 2 | 151 |
| Comparative Example 3 | 178 |

In the results of Table 1, the lifetime characteristics of the lithium-sulfur battery comprising the negative electrode of Example 1, which is the negative electrode of the present invention, showed the best results. In the case of the negative electrode of Example 1, lithium metal was applied on the outer surface and the inside of the three-dimensional carbon structure coated with the fluorine-based polymer. Specifically, the three-dimensional carbon structure coated with the fluorine-based polymer of Example 1 was prepared using an aqueous solution of the fluorine-based polymer containing the fluorine-based polymer in an amount of 10% by weight relative to the total weight of the aqueous solution of the fluorine-based polymer, and the three-dimensional carbon structure coated with the fluorine-based polymer of Example 1 contains fluorine in an amount of 19 parts by weight relative to 100 parts by weight of carbon.

That is, it was found that the fluorine-based polymer spontaneously reacts with the lithium metal to form lithium fluoride at the interface between the lithium metal and the three-dimensional carbon structure coated with the fluorine-based polymer, and the lithium fluoride protects lithium metal and inhibits the growth of lithium dendrite due to its high ion conductivity, thereby improving the lifespan characteristics of the lithium-sulfur battery.

The negative electrode of Comparative Example 2 was formed by laminating lithium metal on a current collector, and Comparative Example 3 was formed by applying lithium metal on the outer surface and the inside of the three-dimensional carbon structure, and each lithium-sulfur battery comprising these did not inhibit the growth of lithium dendrite, and thus showed poor lifetime characteristics.

The negative electrode in Comparative Example 1 was formed by applying lithium metal on the outer surface and the inside of the three-dimensional carbon structure coated with fluorine-based polymer. Specifically, the three-dimensional carbon structure coated with the fluorine-based polymer of Comparative Example 1was prepared using an aqueous solution of the fluorine-based polymer containing the fluorine-based polymer in an amount of 20 % by weight, relative to the total weight of the aqueous solution of the fluorine-based polymer, and the three-dimensional carbon structure coated with the fluorine-based polymer of Comparative Example 1 contained fluorine in an amount of 33 parts by weight relative to 100 parts by weight of carbon. If the fluorine-based polymer is contained in an amount of 20 % by weight or more based on the total weight of the aqueous solution of the fluorine-based polymer, lithium metal and the fluorine-based polymer are overreacted, resulting in a large loss of lithium metal. Accordingly, the lifetime characteristics of the lithium-sulfur battery including the negative electrode of Comparative Example 1 were not improved.

From this, it was confirmed that if the three-dimensional carbon structure coated with the fluorine-based polymer is prepared using an aqueous solution of the fluorine-based polymer containing the fluorine-based polymer in an amount of 20 % by weight or more relative to the total weight of the aqueous solution of the fluorine-based polymer, fluorine in the three-dimensional carbon structure coated with the fluorine-based polymer exceeds 30 parts by weight relative to 100 parts by weight of carbon, and accordingly the reaction between the fluorine-based polymer and lithium metal is excessive, and the loss of lithium metal is increased, which does not improve the lifetime characteristics of the lithium-sulfur battery.

## Claims

1. A negative electrode for a lithium secondary battery, the negative electrode comprising:
a three-dimensional carbon structure coated with a fluorine-based polymer; and lithium metal applied on an outer surface and inside of the three-dimensional carbon structure coated with the fluorine-based polymer;
wherein the three-dimensional carbon structure is a porous carbon structure comprising at least one selected from the group consisting of a carbon paper, a carbon felt, and a carbon mat; or the three-dimensional carbon structure means cylindrical carbon materials interconnected in three dimensions, wherein the cylindrical carbon material are at least one selected from the group consisting of carbon nanofibers, carbon nanotubes, graphite nanofibers, and activated carbon fibers;
the fluorine-based polymer comprises at least one selected from the group consisting of polytetrafluoroethylene, polyvinylidene fluoride, vinylidene fluoride-hexafluoropropylene copolymer, perfluoroalkoxy alkane, tetrafluoroethylene-perfluoroalkyl vinyl ether copolymer, tetrafluoroethylene-hexafluoropropylene copolymer, ethylene-tetrafluoroethylene copolymer, tetrafluoroethylene-chlorotrifluoroethylene copolymer and ethylene-chlorotrifluoroethylene copolymer; **characterized in that**
the three-dimensional carbon structure coated with the fluorine-based polymer contains 5 to 30 parts by weight of fluorine relative to 100 parts by weight of carbon measured using SEM point EDS.

2. The negative electrode for the lithium secondary battery according to claim 1, wherein the three-dimensional carbon structure coated with the fluorine-based polymer is formed by coating the three-dimensional carbon structure with an aqueous solution containing the fluorine-based polymer;
wherein the fluorine-based polymer is contained in an amount of 2% by weight or more and less than 20 % by weight relative to the total weight of the aqueous solution containing the fluorine-based polymer.

3. The negative electrode for the lithium secondary battery according to claim 1, wherein the lithium metal is applied by laminating a lithium foil to the three-dimensional carbon structure coated with the fluorine-based polymer.

4. The negative electrode for the lithium secondary battery according to claim 1, wherein it comprises lithium fluoride formed by the reaction of the fluorine-based polymer and the lithium metal.

5. The negative electrode for the lithium secondary battery according to claim 4, wherein the lithium fluoride is formed at the interface between the three-dimensional carbon structure coated with the fluorine-based polymer and the lithium metal.

6. The negative electrode for the lithium secondary battery according to claim 1, wherein the negative electrode for the lithium secondary battery is a negative electrode for a lithium-sulfur battery.

7. A lithium secondary battery comprising a positive electrode; a negative electrode; a separator interposed between the positive electrode and the negative electrode; and an electrolyte, wherein negative electrode is the negative electrode of any one of claims 1 to 6.

8. The lithium secondary battery according to claim 7, wherein the lithium secondary battery is a lithium-sulfur battery.

## Patentansprüche

1. Negative Elektrode für eine Lithium-Sekundärbatterie, wobei die negative Elektrode umfasst:
eine dreidimensionale Kohlenstoffstruktur, die mit einem Polymer auf Fluorbasis beschichtet ist; und Lithiummetall, das auf eine Außenfläche und Innenseite der dreidimensionalen Kohlenstoffstruktur aufgebracht ist, die mit dem Polymer auf Fluorbasis beschichtet ist;
wobei die dreidimensionale Kohlenstoffstruktur eine poröse Kohlenstoffstruktur ist, die mindestens eines umfasst, das aus der Gruppe ausgewählt ist, die aus einem Kohlenstoffpapier, einem Kohlenstofffilz und einer Kohlenstoffmatte besteht; oder die dreidimensionale Kohlenstoffstruktur zylindrische Kohlenstoffmaterialien bedeutet, die in drei Dimensionen miteinander verbunden sind, wobei das zylindrische Kohlenstoffmaterial mindestens eines ist, das aus der Gruppe ausgewählt ist, die aus Kohlenstoffnanofasern, Kohlenstoffnanoröhren, Graphitnanofasern und Aktivkohlefasern besteht;
das Polymer auf Fluorbasis mindestens eines umfasst, das aus der Gruppe ausgewählt ist, die aus Polytetrafluorethylen, Polyvinylidenfluorid, Vinylidenfluorid-Hexafluorpropylen-Copolymer, Perfluoralkoxyalkan, Tetrafluorethylen-Perfluoralkylvinylether-Copolymer, Tetrafluorethylen-Hexafluorpropylen-Copolymer, Ethylen-Tetrafluorethylen-Copolymer, Tetrafluorethylen-Chlortrifluorethylen-Copolymer und Ethylen-Chlortrifluorethylen-Copolymer besteht; **dadurch gekennzeichnet, dass**
die dreidimensionale Kohlenstoffstruktur, die mit dem Polymer auf Fluorbasis beschichtet ist, 5 bis 30 Gewichtsteile Fluor enthält, bezogen auf 100 Gewichtsteile Kohlenstoff, gemessen unter Verwendung von SEM-Punkt-EDS.

2. Negative Elektrode für die Lithium-Sekundärbatterie nach Anspruch 1, wobei die dreidimensionale Kohlenstoffstruktur, die mit dem Polymer auf Fluorbasis beschichtet ist, durch Beschichten der dreidimensionalen Kohlenstoffstruktur mit einer wässrigen Lösung gebildet wird, die das Polymer auf Fluorbasis enthält;
wobei das Polymer auf Fluorbasis in einer Menge von 2 Gew.-% oder mehr und weniger als 20 Gew.-% enthalten ist, bezogen auf das Gesamtgewicht der wässrigen Lösung, die das Polymer auf Fluorbasis enthält.

3. Negative Elektrode für die Lithium-Sekundärbatterie nach Anspruch 1, wobei das Lithiummetall durch Laminieren einer Lithiumfolie auf die dreidimensionale Kohlenstoffstruktur aufgebracht wird, die mit dem Polymer auf Fluorbasis beschichtet ist.

4. Negative Elektrode für die Lithium-Sekundärbatterie nach Anspruch 1, wobei sie Lithiumfluorid umfasst, das durch die Reaktion des Polymers auf Fluorbasis und des Lithiummetalls gebildet wird.

5. Negative Elektrode für die Lithium-Sekundärbatterie nach Anspruch 4, wobei das Lithiumfluorid an der Grenzfläche zwischen der dreidimensionalen Kohlenstoffstruktur, die mit dem Polymer auf Fluorbasis beschichtet ist, und dem Lithiummetall gebildet wird.

6. Negative Elektrode für die Lithium-Sekundärbatterie nach Anspruch 1, wobei die negative Elektrode für die Lithium-Sekundärbatterie eine negative Elektrode für eine Lithium-Schwefel-Batterie ist.

7. Lithium-Sekundärbatterie, umfassend eine positive Elektrode; eine negative Elektrode; einen Separator, der zwischen der positiven Elektrode und der negativen Elektrode angeordnet ist; und einen Elektrolyten, wobei die negative Elektrode die negative Elektrode nach einem der Ansprüche 1 bis 6 ist.

8. Lithium-Sekundärbatterie nach Anspruch 7, wobei die Lithium-Sekundärbatterie eine Lithium-Schwefel-Batterie ist.

## Revendications

1. Électrode négative pour une batterie rechargeable au lithium, l'électrode négative comprenant :
une structure de carbone tridimensionnelle revêtue d'un polymère à base de fluor ; et du lithium métal appliqué sur une surface extérieure et à l'intérieur de la structure de carbone tridimensionnelle revêtue du polymère à base de fluor ;
où la structure de carbone tridimensionnelle est une structure de carbone poreuse comprenant un ou plusieurs éléments sélectionnés dans le groupe constitué d'un papier de carbone, un feutre de carbone et une natte de carbone ; ou la structure de carbone tridimensionnelle indique des matériaux de carbone cylindriques interconnectés en trois dimensions, où les matériaux de carbone cylindriques sont un ou plusieurs éléments sélectionnés dans le groupe constitué de nanofibres de carbone, nanotubes de carbone, nanofibres de graphite et fibres de charbon actif ;
le polymère à base de fluor comprend un ou plusieurs éléments sélectionnés dans le groupe constitué de polytétrafluoroéthylène, fluorure de polyvinylidène, copolymère de fluorure de vinylidène-hexafluoropropylène, alcane d'alkoxy perfluoré, copolymère de tétrafluoroéthylène-éther vinylique perfluoroalkyle, copolymère de tétrafluoroéthylène-hexafluoropropylène, copolymère d'éthylène-tétrafluoroéthylène, copolymère de tétrafluoroéthylène-chlorotrifluoroéthylène et copolymère d'éthylène-chlorotrifluoroéthylène ; **caractérisé en ce que**
la structure de carbone tridimensionnelle revêtue du polymère à base de fluor contient 5 à 30 parties en poids de fluor pour 100 parties en poids de carbone, mesurée en utilisant EDS de point de SEM.

2. Électrode négative pour la batterie rechargeable au lithium selon la revendication 1, où la structure de carbone tridimensionnelle revêtue du polymère à base de fluor est formée en revêtant la structure de carbone tridimensionnelle avec une solution aqueuse contenant le polymère à base de fluor ;
où le polymère à base de fluor est contenu dans une quantité égale ou supérieure à 2 % en poids et inférieure à 20 % en poids pour le poids total de la solution aqueuse contenant le polymère à base de fluor.

3. Électrode négative pour la batterie rechargeable au lithium selon la revendication 1, où le lithium métal est appliqué en stratifiant une feuille de lithium à la structure de carbone tridimensionnelle revêtue du polymère à base de fluor.

4. Électrode négative pour la batterie rechargeable au lithium selon la revendication 1, où elle comprend du fluorure de lithium formé par la réaction du polymère à base de fluor et du lithium métal.

5. Électrode négative pour la batterie rechargeable au lithium selon la revendication 4, où le fluorure de lithium est formé à l'interface entre la structure de carbone tridimensionnelle revêtue du polymère à base de fluor et du lithium métal.

6. Électrode négative pour la batterie rechargeable au lithium selon la revendication 1, où l'électrode négative pour la batterie rechargeable au lithium est une électrode négative pour une batterie au lithium-soufre.

7. Batterie rechargeable au lithium comprenant une électrode positive ; une électrode négative ; un séparateur interposé entre l'électrode positive et l'électrode négative ; et un électrolyte, où l'électrode négative est l'électrode négative selon l'une quelconque des revendications 1 à 6.

8. Batterie rechargeable au lithium selon la revendication 7, où la batterie rechargeable au lithium est une batterie au lithium-soufre.
